# EUROPEAN PATENT SPECIFICATION

(11) **EP 0 483 250 B1**
(45) Date of publication and mention of the grant of the patent: **21.09.1994**
(21) Application number: 90911561.0
(22) Date of filing: 26.07.1990
(51) Int. Cl.: G06F 9/46, G06F 9/44

(54) **NON-BUSY-WAITING RESOURCE CONTROL**
NICHT-BESETZT-WARTEZUSTANDSMITTELSTEUERUNG
COMMANDE DE RESSOURCE SUIVANT UN MODE NON-OCCUPE-ATTENTE

(30) Priority: 26.07.1989 US 385733
(43) Date of publication of application: 06.05.1992
(73) Proprietor: MASSACHUSETTS INSTITUTE OF TECHNOLOGY, Cambridge, MA 02139 (US)
(72) Inventor: BARTH, Paul, S., Winchester, MA 01890 (US); SOLEY, Richard, M., Arlington, MA 02174 (US); STEELE, Kenneth, M., Albuquerque New Mexico 87112 (US)
(74) Representative: Driver, Virginia Rozanne
(86) International application number: US9004212
(87) International publication number: WO9102310

(56) References cited:
- IBM TECHNICAL DISCLOSURE BULLETIN, VOL. 14, NO. 5, OCTOBER 1971, A.W. BIDWELL ET AL.: "SHARED STORAGE LOCKING FACILITY", PAGES 1543-1544
- PROCEEDINGS OF THE FIRST INTERNATIONAL CONFERENCE ON SUPERCOMPUTING SYSTEMS, ST. PETERSBURG, FLORIDA, US, 16-20 DECEMBER 1985, IEEE COMPUTER SOCIETY, J.-K. PEIR ET AL.: "DATA FLOW EXECUTION OF FORTRAN LOOPS", PAGES 129-138.
- CONFERENCE PROCEEDINGS OF THE 13TH ANNUAL INTERNATIONAL SYMPOSIUM ON COMPUTER ARCHITECTURE, TOKYO, JAPAN, 2-5 JUNE 1986, IEEE K. KAWAKAMI ET AL.: "A SCALABLE DATAFLOW STRUCTURE STORE", PAGES 243-250
- PROCEEDINGS TENCON 87, 1987 IEEE REGION 10 CONFERENCE, COMPUTERS AND COMMUNICATIONS TECHNOLOGY TOWARD 2000, VOL. 3 OF 3, SEOUL, KOREA, 25-28 AUGUST 1987, IEEE, K. HIRAKI ET AL.: "SYSTEM ARCHITECTURE OF A DATAFLOW SUPERCOMPUTER", PAGES 1044-1049.

## Description

### Background of the Invention

Data processing systems that concurrently perform multiple processes must have a means for synchronizing access to common resources that are shared by the multiple processes. Typically, data processing systems have provided such synchronized access to the shared resources by employing busy-waiting strategies. In busy-waiting, each process makes a request for a resource and waits idly until the resource is available. When the resource eventually becomes available, an idle process gains access to the resource. This approach provides adequate synchronization, but suffers the drawback that the processor must idle while waiting on the resource. One such busy-waiting approach that utilizes a software semaphore mechanism to bring about synchronization was proposed by E.W. Dijkstra in "Co-operating Sequential Processes", in Genuys, ed. Programming Languages, N.A.T.O. 1968. In particular, the proposed approach utilizes a busy-waiting locking semaphore to synchronize multiple processes' access to shared resources.

A shared storage locking facility is known from IBM Technical Disclosure Bulletin Volume 14, No 5, October 1971, pages 1543 and 1544, in which access to the shared storage is controlled through lock and unlock processor instructions, whilst read and write instructions are executed separately in dependence on the lock state.

### Summary of Invention

The present invention includes a data structure for implementing a locking protocol. This locking protocol provides synchronization of access to a data processing resource by multiple processes.

According to a first aspect of the present invention there is provided a data processing system, comprising:
at least one processor element for generating access requests to a data processing memory of at least first and second access request types which include read and write requests; and
a memory storing a data structure for implementing a locking protocol for access requests to memory comprising:
a. a value field for holding values which can be accessed by an access request; and
b. a lock field addressed with the value field that indicates whether the value field is locked;

characterised in that the first and second access request types are hybrid requests which also control locking of the memory; and
characterised by a controller for controlling service of access requests to the memory and locking of the lock field in response to an access request of the first access request type, the controller, when the lock field is locked, deferring access to the value field by an access request of the first access request type that locked the value field but unlocking the value field and servicing any access request of the second access request type.

According to a further aspect of the present invention there is provided a method of synchronizing access by a plurality of processes generated in a data processing system to a data processing resource by means of at least first and second access request types which include read and write requests wherein the resource contains a synchronizer having a lock field for indicating the current lock state of the resource, characterised in that the first and second request types are hybrid requests which also control locking of the resource; and
characterized by the steps of:
a. the synchronizer setting the lock field of the resource to a locked state when the resource is requested by the first access request type if the lock field is in an unlocked state;
b. the synchronizer setting the lock field of the resource to an unlocked state when the resource is requested by any access request of the second access request type if the lock field is in a locked state; and
c. the synchronizer setting the lock field of the resource to a locked and deferred state when the resource is requested by the first access request type if the lock field is in a locked state, and the synchronizer then also adding the resource request on to a deferred list of pending resource requests of the first type.

In accordance with one embodiment of the present invention, the value field may hold data or, alternatively, it may hold a pointer to a deferred list of lock or unlock requests. These two kinds of values share the use of the value field to optimize efficiency. They can share the same value field because they will never be stored in the value field at the same time. The nature of the two values makes them inherently mutually exclusive. In accordance with another embodiment of the present invention, the pointer does not share the value field with data; rather, it is stored in a separate field that is distinct from the value field.

When the lock field is in a locked and deferred state, it preferably is an indicator that a process currently has exclusive access to the value field and that multiple requests of the same request type for access to the value field are pending. The pending multiple requests may be stored on a deferred list that is pointed to by the pointer. Similarly, when the lock field is in an unlocked and deferred state, it is preferably an indication that no process currently has exclusive access to the data field, but that multiple requests to unlock the value field are pending. The pending unlock request may be stored on a deferred list that is pointed to by the pointer.

If the lock field is in a locked state, an unlock request changes the lock field to an unlocked state. In converse, if the lock is in an unlocked state, a lock request changes the lock field to a locked state. The locking scheme of the present invention, however, is not limited to such basic states for other possibilities exist. For instance, if the lock field is in a locked state and a lock request is received, the state of the lock field is changed to a locked and deferred state. The lock request is added on to the deferred list. Likewise, if an unlock request is received while the lock field is in an unlocked state, the state of the lock field is changed to an unlocked and deferred state and the unlock request is added to the deferred list.

Once in these deferred states, the lock field will stay in the deferred states until the deferred requests have been serviced. In particular, if the lock field is in a locked and deferred state and a lock request is received, the lock field stays in that state. Analogously, if the lock field is in an unlocked and deferred state and an unlock request is received, the lock field stays in the unlocked and deferred state. In either of these cases, the respective requests are added on to the deferred list.

Moreover, the lock field will stay in its current state when the lock field is currently in a locked and deferred state and an unlock request is received if multiple lock requests are on the deferred list. A lock request, however, is popped off the deferred list in response to the unlock request. A similar situation exists when the lock field is currently in an unlocked and deferred state and a lock request is received. The lock state remains in the unlocked and deferred state, nevertheless, an unlock request is popped off the deferred list.

Only when the last request on a deferred list is popped off the deferred list does the lock field change states. Specifically, if the lock field is in a locked and deferred state and the last lock request is popped off the deferred list by an unlock request the lock field changes to a locked state. Furthermore, if the lock field is in an unlocked and deferred state and the last unlock request is popped off the deferred list by a lock request, the lock field changes to an unlocked state.

The above scheme may be used to share memory locations and I-structures. The present invention uses a memory location locking means for implementing the above locking scheme of shared memory locations. The memory location locking means has a process indicator comprised of a frame pointer and instruction pointer preferably held in a register. The frame pointer points to a memory location to be accessed in the memory and the instruction pointer indicates an instruction to be performed at that location. Each memory location includes the above-mentioned lock state. The operation of the locking scheme is overseen by a local controller. The local controller looks to the instruction pointed to by the instruction pointer, to the contents of the location pointed to by the frame pointer and to the associated lock state to determine what is to be done in response to the instruction.

This locking scheme may be used in a data processing system such as a dataflow processing system. Such a data processing system has a plurality of processes, a memory such as described above and a controller as described above. The system is designed such that a request for memory access may be made by a processing element, and it may perform other tasks while waiting for the memory access to be performed.

### Brief Description of the Drawings

Figure 1 illustrates the major components of the data processing system.

Figure 2 illustrates the fields included within a token.

Figure 3 illustrates a memory unit in detail.

Figure 4 illustrates an addressable memory location.

Figure 5 illustrates a state diagram of the basic locking scheme.

Figures 6a and 6b illustrate a sequence of read/lock tokens and the effect of their execution on a memory location.

Figure 7a and 7b illustrate a sequence of write/unlock tokens and the effect of their execution on a memory location.

Figure 8 illustrates a sample queueing operation performed using the enhanced locking strategy.

### Detailed Description of the Preferred Embodiment

The preferred embodiment of the present invention concerns a data flow processing system 2 having locking memory locations. The data flow processing system is comprised of a plurality of processing elements 5 that share numerous memory units 10. These processing elements 5 perform multiple processes in parallel. The processes performed include operations that require access to the memory units 10. Given that such operations are performed in parallel, problems with the multiple processes seeking access to the same memory unit location may arise. To avoid potential conflict between competing processes, individual processes are granted access to single memory locations for limited periods of time. Specifically the memory locations are not modified until a processing element is finished using the memory location.

This capability is provided by the use of a locking mechanism. The memory location is prevented from being accessed until the memory location has been unlocked by an unlocking request. Other processes, however, are not required to remain idle while waiting for the memory location to be unlocked. They continue processing other tasks while waiting.

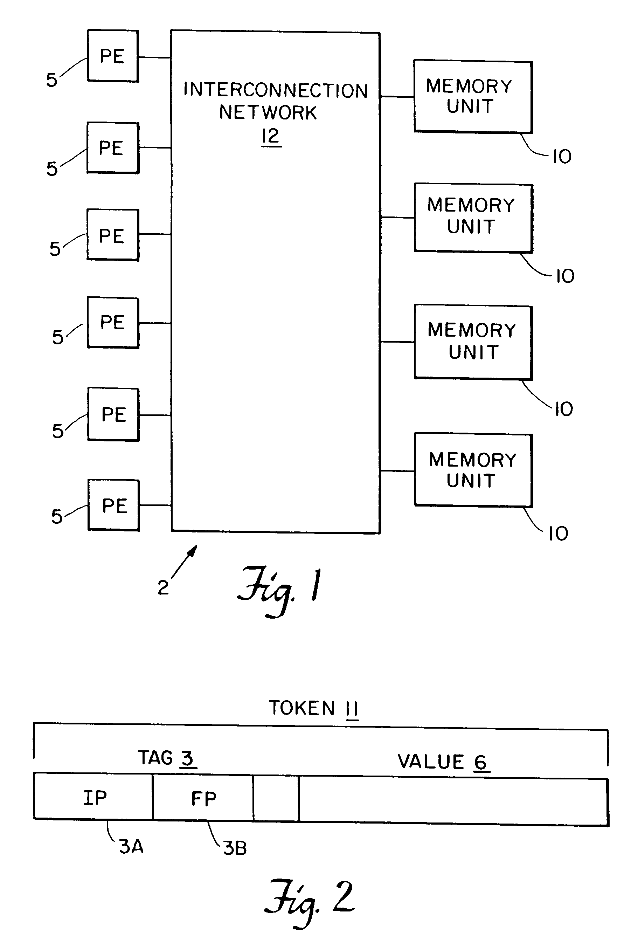

Figure 1 shows the major components of the data flow processing system 2. Specifically, the system 2 includes a plurality of processing elements 5 and a plurality of memory units 10. Communication between the memory units 10 and the processing elements 5 is achieved via an interconnection network 12. The interconnection network 12 is comprised of circuitry well known in the prior art. Each of the processing elements 5 has access to each of the memory units 10. These processing elements 5 are preferably pipelined so as to maximize the parallel activity within each processing element 5. A preferred processing element configuration is presented in G. Papadopoulos, "Implementation of a General Purpose Dataflow Multiprocessor", Doctoral Thesis, Massachusetts Institute of Technology, 1988.

The data flow processing system 2 is preferably a tagged token data flow processing system that operates upon tokens. As Figure 2 illustrates these tokens 11 are comprised of a tag field 3 and a value field 6. The tag field 3 is used to hold an instruction pointer 3a designated as IP in Figure 2 and to hold a frame pointer 3b designated as FP in Figure 2. The instruction pointer 3a points to an instruction to be performed. The frame pointer 3b, in contrast, points to the beginning of a frame of memory locations, one of which is accessed by the instruction. The value field 6 is used for a purpose. It is used to store a value. The significance of the value held in the value field 6 varies and depends upon the instruction to which the instruction pointer 3a points. For instance, the value may represent an address or simply a current data value.

Each processing element 5 maintains a local token queue in which it stores a plurality of tokens. Each processing element 5 clocks a new token from the token queue into the pipeline of the processing element 5 every clock cycle of a system clock. Within the pipeline of the processing element 5, execution is attempted of the instruction pointed by the instruction pointer 3a of the tag portion 3 of the token 11. Often, however, to complete execution of the instruction it is necessary to access memory. In such a case, the pipeline of the processing element 5 generates a new token, the tag of which indicates a reading operation or a writing operation to be performed at the memory location that needs to be accessed. These tokens exit the pipeline and travel across the interconnection network 12 to the memory units 10 where the memory access requests are serviced. How such memory access requests are handled and the memory mechanisms for efficiently servicing such requests are of great concern to the preferred embodiment of the present invention.

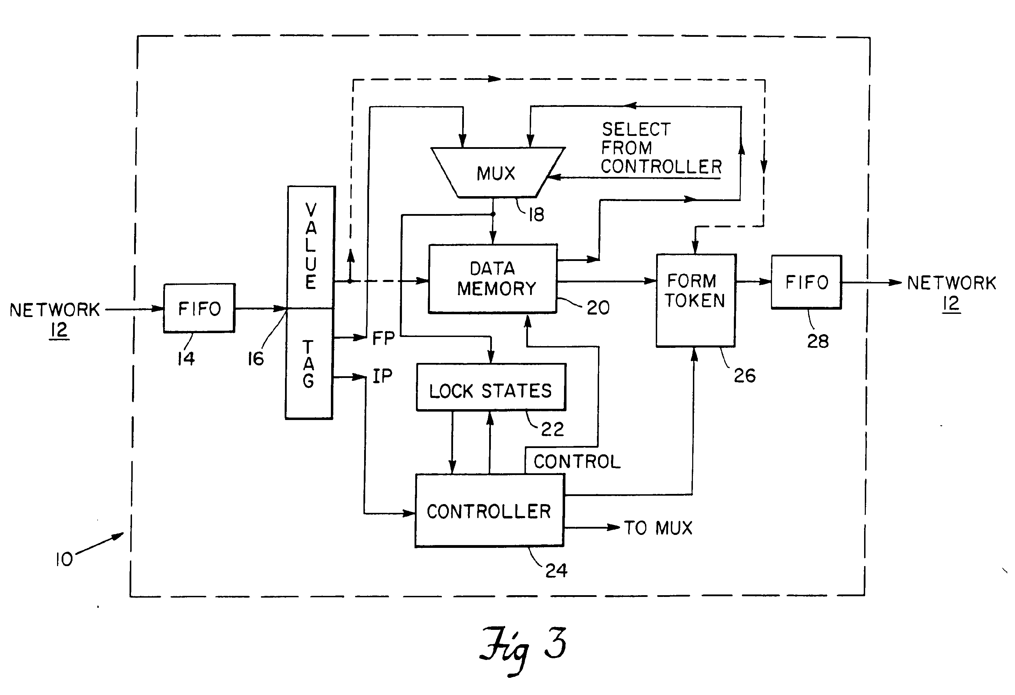

Figure 3 shows a memory unit 10 with locking capability in more detail than Figure 1. The memory unit 10 includes a first FIFO 14 for buffering incoming tokens sent from the processing elements 5 seeking access to memory. The tokens after being stored in the first FIFO buffer 14 are sent one at a time to a register 16. The register 16 is in communication with a multiplexer 18, a data memory 20 and a controller 24. In addition, a token forming buffer 26 is provided to assist in generation of output tokens. The output tokens are delivered to a second FIFO buffer 28 and subsequently delivered from there to the network 12.

In typical operation, the memory unit 10 receives tokens 11 seeking access to memory from a processing element 5 via the network 12. These tokens are temporarily stored in the first FIFO buffer 14. When the register 16 is ready to receive a new token from the first FIFO buffer 14 a token is transferred out of the first FIFO buffer 14 to the register 16. As processing continues, the frame pointer value 3b is taken from the token held in register 16 and passed on to a multiplexer 18. The frame pointer points to the specific memory location to be accessed. The instruction pointer value 3a is also forwarded but to the controller 24. The instruction pointer tells the controller 24 what operation is to be performed at the memory location specified by the frame pointer.

Once the controller 24 determines the operation to be performed, it sends an appropriate select signal to the multiplexer 18 to select the memory address to be accessed. The address may be the address indicated by the frame pointer 3b or an address found in a memory location of data memory 20. If the address is selected to be one found in the memory location of data memory, it is a deferred list address. Deferred lists will be discussed in more detail below. The address selected by the multiplexer 18 travels to the address line of data memory 20 and to the address lines of the lock state memory 22 where the address is used to gain access to the respective memory locations. The controller 24 examines the lock state associated with the addressed location and acts accordingly.

As is apparent from the suggested configuration, the lock states and data values of a memory address need not be stored at the same physical memory location. In fact, they may be stored at separate physical locations, but they must addressable by a single memory address so that when an address is accessed both the data and lock states are available. It is desireable to physically divide the memory so that memory access time for the lock state information may be optimized. Specifically, it is preferred that a static high speed memory be used to store the lock state memory 22 because of the large number of accesses to the lock states generally required. Typically, a lock state must be read and a new lock state written for each locking instruction performed. Using a static memory minimizes the time spent on these transactions. A static memory, however, is not desirable for the data memory 20 because it entails too great of an expense. Moreover, the need for such a static memory with data is not as great as it is with the lock states since the data is not accessed as frequently as the lock states. Hence, a dynamic memory should be used for data memory 20.

Read and write instructions in the preferred embodiment are not simply standard read and write instructions. Rather they are hybrid instructions that perform dual functions. Specifically, read instructions in addition to performing a standard read lock the memory locations that are read, and write instructions unlock the memory locations which are written. These are the only lock control instructions that are required to implement preferred embodiment. Standard read and write instructions are available within the data flow processing system 2 but are only used at portions of the memory which are not capable of being locked and unlocked. It is preferable to have portions of the memory that may not be locked and may not be unlocked because there is an overhead associated with maintaining locks and unlocks. Since it is not necessary to have locks and unlocks at every memory location, it is possible to eliminate this unnecessary overhead by having non-locking locations as well as locking locations. For the remainder of the discussion it can be assumed that all reads and all writes refer to read/lock instructions and write/ unlock instructions, respectively.

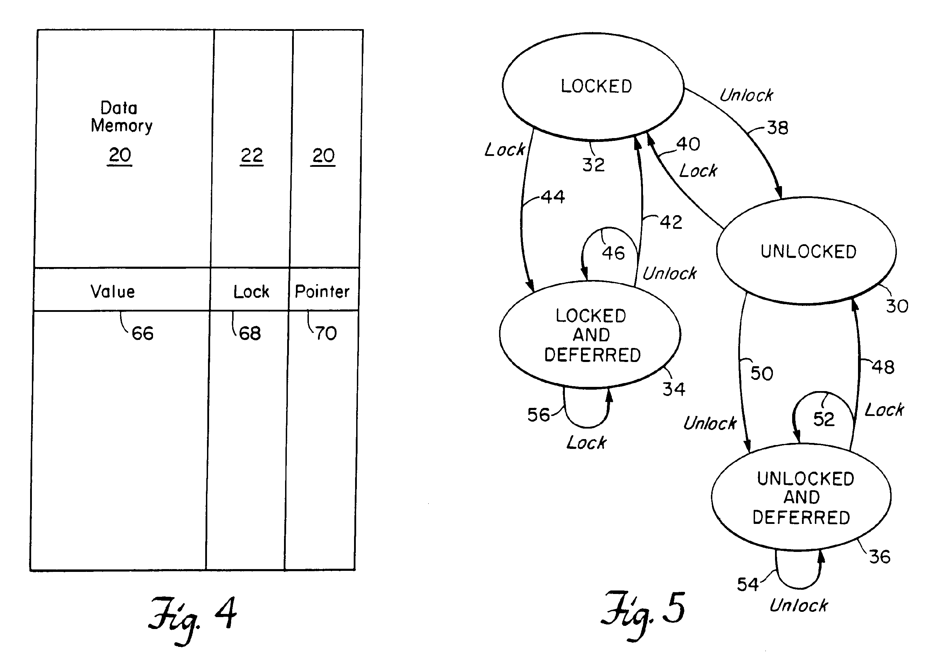

Figure 4 depicts a typical memory location. This memory location may be comprised of three fields. Two of these fields 66 and 70 are physically located in data memory 20, whereas the other field 68 is physically located in the lock state memory 22. The first field is the value field 66 which is used for storing values such as data and addresses as described previously. The lock field 68 is used for storing the current lock state of the memory address. Lastly, the pointer field 70 is provided to store pointers to elements of a deferred list if necessary. In the alternative, a pointer field 70 need not be used; rather, the value field 66 can be used as the functional equivalent of both the value field 66 and the pointer field 70. In particular, when this option is employed, the value field 66 stores either data or a pointer, since both never reside in a memory location at the same time, it may be more efficient to have both stored in a single field. The present invention does not choose one of these alternatives but instead encompasses both these alternatives.

Suppose that a token carrying a write/unlock request enters the memory unit 10 and the memory location to be written into is in a locked state. As the token is processed, the controller 24 gains access to the memory location specified on the address lines of the data memory 20 as was noted above. The controller then causes the value held in the value field 5 of the token 11 in the register 16 to be written into the accessed memory location.

Suppose, however, that the token carries instead a request for a read/lock instruction to be performed and the memory location is in an unlocked state. In that case, the controller 24 uses the address on the address lines of the data memory 20 to access a memory location within data memory 20. Once the controller 24 gains access to the memory location, it reads the contents of the memory location. The contents are then forwarded to the token forming buffer 26. In such a case, the value field of the incoming token 11 is passed to the token forming buffer 26 as a destination address for the read value. This destination address is placed in the frame pointer field of the output token at the token forming buffer 26. It identifies a processing element and a frame of memory local to the processing element. In addition, the instruction pointer for the output token is forwarded by the controller 24, and the value is forwarded from data memory 20 as dictated by the controller 24. The output token is next forwarded to the second FIFO buffer 28. This buffer is provided in order to allow for a backlog of output tokens so as to prevent swamping of the network 12. The output tokens held in the second buffer 28 are forwarded to the network 12 when the network 12 is ready to receive them.

If a read/lock is sought and the memory location to be read is in a locked and deferred state (this state will be discussed in more detail later), the system responds differently to the token than if the memory location were in an unlocked state. First, when the memory location is in such a locked and deferred state, output tokens are formed only when the appropriate data arrives via an write/unlock request. Second, the destination address is not taken from the value field of the register 16, rather it is taken from an element on the deferred list held in data memory corresponding to the read/lock request. The organization of deferred lists will be described below in an example. The other fields of the output token are, still, formed as previously described.

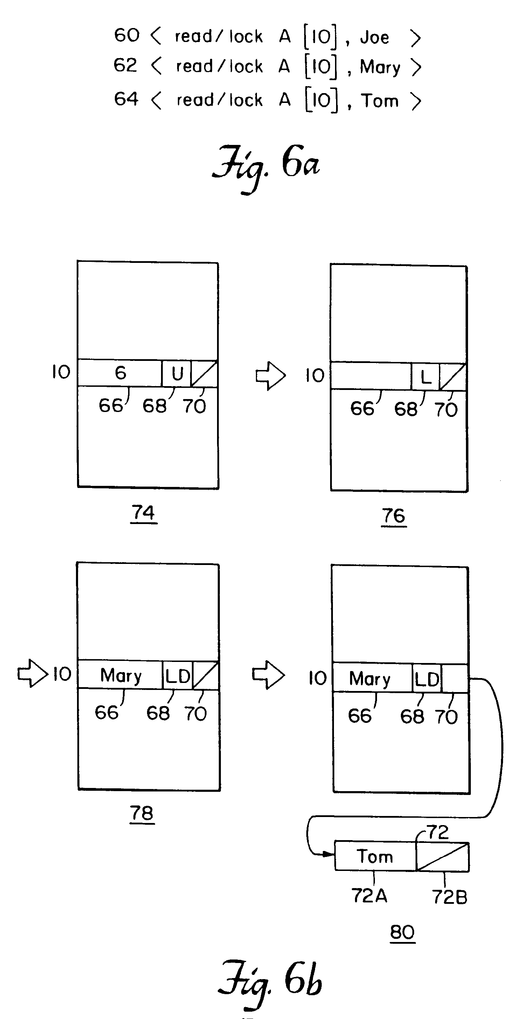

It should be bore in mind that the non-locking locations contain the same bits that comprise the lock field at locking locations. These bits however, have a different significance in the non-locking locations. In locking locations the bits represent the different lock states. The three basic states which the lock field of a memory location may assume are shown in Figure 5. The three states are unlocked 30, locked 32 and locked and deferred 34. All memory locations that are capable of being locked are initially in an unlocked state 30. If a lock read/lock request 40 is made to a memory location, the lock field of the memory location is changed to a locked state 32. If a write/unlock request 38 subsequently arrives to the same memory location, the lock field of the memory location is changed back to an unlocked state 30.

If the location is in a locked state and a read/lock request 44 arrives, it changes the state field to a locked and deferred state 34. Any additional read/lock requests 56 received while the state field is in this locked and deferred state 34 do not alter the state. These requests, nevertheless, are stored in a deferred list. Write/unlock requests 46 received while the state field is in a locked and deferred state 34 act to remove a single corresponding read/lock request from the deferred list. The final such write/unlock request 42 removes the last deferred read/lock request and returns the state field to a locked state 32. The order of requests in this example need not be followed. Requests for write/unlocks and read/locks may occur in any order. The order described above was chosen merely for illustrative purposes.

The significance of the locked state and the locked and deferred state is that no other processing elements 5 other than the processing element to which the read/lock is granted may access the memory location with a further read/lock request while locked. The other processing elements 5 must wait until that location is unlocked before they can gain access to it. A useful analogy is to view the memory location as a library book. When a person seeks to check out the library book it is the equivalent of a read/lock instruction. The person checking out the book has exclusive access to the book. He may modify the book and given that only one book is available, he may then replace the modified book such that all subsequent persons receive the book as modified by him. Any persons seeking to check out the book while it is gone may not obtain the book but may, however, request that their name be written down on a list of persons seeking the book.

This list is analogous to the deferred list in the locked and deferred state. When the person who originally checked out the book returns the book, it is as if he submits a write/unlock request. The book is still in a locked and deferred state because there are still names on the list. However, the first person on the list receives the book and is struck from the list. This process is repeated with every subsequent returning of the book until the last person on the list gains possession of the book at which time the book is merely in a locked state. If this person returns the book the state returns to an unlocked state.

The above description describes the basic states needed to implement a locking strategy in accordance with an embodiment of the present invention. These states may, however, be embellished upon to produce a more powerful locking strategy that has an additional state: unlocked and deferred. The state diagram that is produced when this state is added to the previous state diagram is shown in Figure 5. The additional state provides the present invention's locking strategy with a queueing capability.

To assist in understanding the unlocked and deferred state 36, suppose, that the memory location is initially in an unlocked state and that a write/unlock request 50 is received. The lock field of the memory address is changed to an unlocked and deferred state 36. While in this unlocked and deferred state 36, any subsequently received write/unlock requests 54 have no effect on the state held in the lock field; however, the requests are put into a deferred list. This list is implemented using the same hardware that is used in the locked and deferred list. Since both lists cannot exist at the same time, the sharing of hardware for both lists offers an efficient strategy that minimizes overhead costs.

Read/lock requests 52 received while there are still write/unlock requests on the deferred list cause 52 write/unlock requests to be popped off the list. The requests on the deferred list are popped off one at a time such that each write/unlock request is popped off the list only in response to an associated read/lock request. The write/unlock request that is popped off need not be located at the head of the list. It can be located elsewhere in the list without imposing large overhead costs. Eventually, as processing continues, the deferred list is reduced to a single write/unlock request. This final write/unlock request on the deferred list, like its predecessors, is popped off the list by read/lock request 48. When it is popped off, the state field of the memory locator is changed back to an unlocked state 30. This strategy assures that all deferred write/unlock requests are handled before the state field is returned to an unlocked state 30.

Figures 6a and 6b illustrate a sequence of tokens and the corresponding effects of executing these tokens. In particular, Figure 6a illustrates tokens 60, 62, and 64 which are executed in sequential order. Suppose initially that the value field 66 of the memory location has a value of six and that the state field 68 has a value of an unlocked state indicated as "U" in the memory state 74 of Figure 6b.

When token 60 is executed, the memory location contents at address 10 change to a memory state 76. In particular, the value six is read out of the value field 66. The value field 66 enters a don't care condition. The state field 68 is changed to indicate that the memory location is now locked (denoted by a "L"). The value six is sent to the address Joe via a new token. Joe is a name given a frame pointer value of the return address for illustrative purposes.

When token 62 is executed, the memory location contents at address 10 change to memory state 78. Instead of storing a piece of data in the value field 66, the return address Mary is stored in the value field 66. Mary like Joe is merely a name given to the return address for illustrative purposes. Furthermore, the state field 68 is changed from a locked state to a deferred and locked state (denoted as "LD"). At this time, no new token is generated to return the data to its destination. When the data becomes available, a new token is generated to carry the data to its destination. If a write/unlock request is received for address 10, the memory controller 24 knows that a pending lock (read/lock) request seeking to return a read value to a location Mary is outstanding.

When the last token 64 is executed, location 10 is already in a deferred and locked state. The value field 66 and the state field 68 are not changed. Rather, the only change that occurs is that pointer field 70 which was previously "nil" is changed so that it points to a read/lock request 72. This lock request stores the return address of the request at 72a, which is Tom in this case. It also stores a pointer 72b to the next request on the deferred list. In this case, there are no more requests; hence, no value is stored in the pointer.

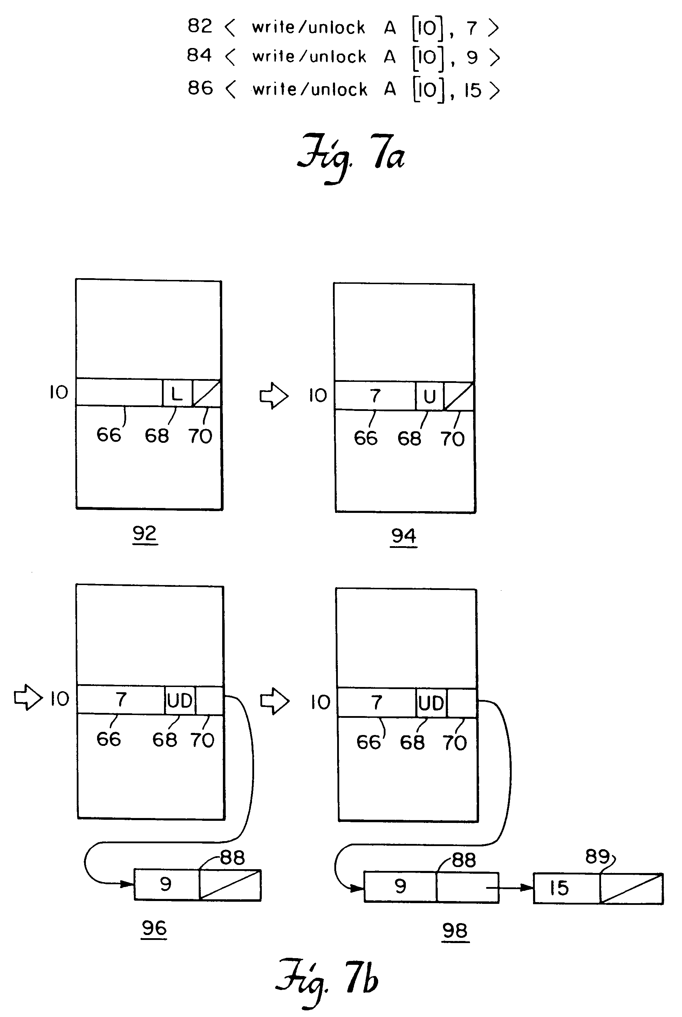

Figures 7a and 7b show a sequence of write/unlock tokens and the resulting memory state produced by executing these tokens 82, 84 and 86. Suppose that the memory location contents at address 10 start off in a memory state 92 where the value field 66 has a don't care value. Further, the lock field 68 is in a locked state and the pointer field 70 is in a nil state. When the token 82 is executed, the memory location 10 contents change to memory state 94. In this memory state, the value field 66 has a value of seven and the lock field 68 has a value of unlocked. The pointer field 70 remains in a nil state. No new token is generated.

When token 84 is executed, the memory location contents 10 change into memory state 96. The value field 66 remains as it did in memory state 94. Specifically it still stores a value of seven. The lock field, however, is changed to an unlocked and deferred state. Furthermore, the pointer field 70 now points to an unlock request 88. This unlock (write/unlock) request 88 contains a value to be written by the request. In this case, the value is nine and contains a pointer to the next request in the deferred list. Since there are no other requests in this example case, the pointer has a value of nil.

The execution of token 86 does not alter the contents of memory location 10, rather, it merely adds another unlocked request to the deferred list. Specifically, request 88 changes its pointer value, to point to an additional unlock request 89. This unlock request 89 includes the value sought to be written (i.e. fifteen), and a pointer. The pointer has a nil value for the request 89 is the last request on the deferred list.

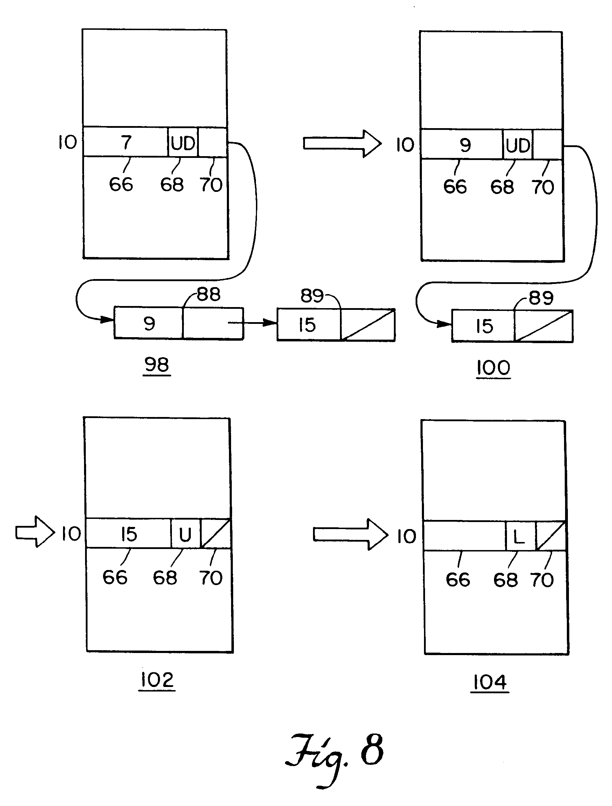

To further understand the relationship between the read lock command and write unlock command and to show the queueing capability provided by using a unlocked and deferred state, suppose that the tokens specified in Figure 7a are executed resulting in memory state 98. Subsequently, the tokens specified in Figure 6a are executed. Figure 8 shows the memory states that occur for memory location 10. When token 60 is executed requesting a read/lock the value seven at the head of the deferred list is removed and sent to the address specified by Joe via a newly generated token. Executed token 62 changes the memory location so that the contents at address 10 are as shown in memory state 102. Meanwhile, the value nine is sent to the memory location at address Mary. The memory location 10 has the value fifteen in its value field 66, and it is set in an unlocked state as noted by the lock field 68. Moreover, the pointer field 70 is set at nil. Lastly, token 64 is executed, and the memory location contents at address 10 enter memory state 104. In memory state 104 the value field 66 has a don't care value, the lock field 68 is in a locked state and the pointer has a value of "nil". The value fifteen is sent to the memory location address Tom.

The present invention allows a memory access request to be made by a processing element without having to keep track of requests to memory and without having to send duplicate requests to memory, that is without busy-waiting. The requests are stored in a deferred list and are serviced at a later time. In the interim, the processing element may perform other tasks. Moreover, the present invention provides such synchronization efficiently. It stores locks atomically such that any access to data in a memory brings about access to the lock state. As such, two separate memory access transactions are not required. Furthermore, the correspondence of the lock to its piece of data is pre-established by their sharing of a memory address. No matching means, adjacency means, pointers or other means are required.

The present invention as claimed may be used with resources other than memory locations, and may be implemented in data processing architectures other than data flow machines.

## Claims

1. A data processing system, comprising:
at least one processor element (5) for generating access requests to a data processing memory (10) of at least first and second access request types which include read and write requests; and
a memory (20,22) storing a data structure for implementing a locking protocol for access requests to memory comprising:
a. a value field (66) for holding values which can be accessed by an access request; and
b. a lock field (68) addressed with the value field that indicates whether the value field is locked;
characterised in that the first and second access request types are hybrid requests which also control locking of the memory; and
characterised by a controller (24) for controlling service of access requests to the memory and locking of the lock field in response to an access request of the first access request type, the controller, when the lock field is locked, deferring access to the value field by an access request of the first access request type that locked the value field but unlocking the value field and servicing any access request of the second access request type.

2. The data processing system of claim 1 wherein the first access request type is a read/lock request type, and the second access request type is a write/unlock request type.

3. The data processing system of claim 1 or 2 wherein the lock field (68) includes a locked and deferred state that indicates multiple requests of the locking type are pending and are stored on a deferred list of requests.

4. The data processing system of claim 3 wherein, when the lock field (68) is in the locked and deferred state, the value field (66) holds a pointer which points to a deferred list of locking type access requests.

5. The data processing system of any one of claims 1 to 4 wherein the lock field (68) includes an unlocked and deferred state that indicates that multiple requests of the unlocking type are pending and are stored on a deferred list of requests.

6. The data processing system of claim 5 wherein, when the lock field (68) is in the unlocked and deferred state, the value field (66) holds a pointer which points to a deferred list of locking type access requests.

7. A method of synchronizing access by a plurality of processes generated in a data processing system to a data processing resource (10) by means of at least first and second access request types which include read and write requests wherein the resource contains a synchronizer (24) having a lock field (68) for indicating the current lock state of the resource, characterised in that the first and second request types are hybrid requests which also control locking of the resource; and
characterized by the steps of:
a. the synchronizer (24) setting the lock field (68) of the resource to a locked state when the resource is requested by the first access request type if the lock field (68) is in an unlocked state;
b. the synchronizer (24) setting the lock field (68) of the resource to an unlocked state when the resource is requested by any access request of the second access request type if the lock field is in a locked state; and
c. the synchronizer (24) setting the lock field (68) of the resource to a locked and deferred state when the resource is requested by the first access request type if the lock field is in a locked state, and the synchronizer then also adding the resource request on to a deferred list of pending resource requests of the first type.

8. A method as recited in claim 7 wherein the first access request type is a read/lock request type, and the second access request type is a write/unlock request type.

9. A method as recited in claim 7 or 8 further comprising the step of:
the synchronizer (24) setting the lock field (68) of the resource to an unlocked and deferred state when the resource is requested by the second access request type if the lock field is in an unlocked state, and the synchronizer then also adding the resource request on to a deferred list of pending resource requests of the second type.

10. A method as recited in claim 7, 8 or 9 further comprising the step of:
the synchronizer (24) keeping the lock field (68) of the resource in a locked and deferred state when the resource is requested by the first access request type if the lock field is in a locked and deferred state, and the synchronizer then also adding the resource request on to the deferred list of pending resource requests of the first type.

11. A method as recited in any one of claims 7 to 10 further comprising the step of:
the synchronizer (24) keeping the lock field (68) of the resource in an unlocked and deferred state when the resource is requested by the second access request type if the lock field is in an unlocked and deferred state, and the synchronizer then also adding the resource request on to the deferred list of pending resource requests of the second type.

12. A method as recited in any one of claims 7 to 11 further comprising the step of:
the synchronizer (24) keeping the lock field (68) of the resource in a locked and deferred state when the resource is requested by the second access request type if the lock field (68) is in a locked and deferred state and other requests for the resource of the first type have been received yet are still outstanding, the synchronizer then also popping a pending resource request off the deferred list of pending resource requests of the first type.

13. A method as recited in any one of claims 7 to 12 further comprising the step of:
the synchronizer (24) keeping the lock field (68) of the resource in an unlocked and deferred state when the resource is requested by the second access request type if the lock field is in an unlocked and deferred state and other requests for the resource of the first type have been received yet are still outstanding, and the synchronizer then also popping a pending resource request off the deferred list of pending resource requests of the first type.

14. A method as recited in any one of claims 7 to 13 further comprising the step of:
the synchronizer (24) setting the lock field (68) of the resource to a locked state when the resource is requested by the second access request type if the lock field is in a locked and deferred state and only one request for the resource of the first type is outstanding, and the synchronizer then also popping the last pending resource request off the deferred list of pending resource requests of the first type.

15. A method as recited in any one of claims 7 to 14 further comprising the step of:
the synchronizer (24) setting the lock field (68) of the resource to an unlocked state when the resource is requested by the first access request type if the lock field is in an unlocked and deferred state and only one request for the resource of the second type is outstanding, and the synchronizer then also popping the last pending resource request off the deferred list of pending resource requests of the second type.

16. A method as recited in any one of claims 7 to 15 wherein the resource is a shared memory.

## Patentansprüche

1. Datenverarbeitungssystem, umfassend:
mindestens ein Prozessorelement (5) zum Erzeugen von Zugriffsanforderungen zu einem Datenverarbeitungsspeicher (10), wobei die Zugriffsanforderungen mindestens einen ersten und einen zweiten Anforderungstyp umfassen, zu denen Lese- und Schreibanforderungen gehören; und
einen Speicher (20, 22) zum Speichern einer Datenstruktur zum Realisieren eines Sperrprotokolls für Zugriffsanforderungen zu dem Speicher, umfassend:
a. ein Wertefeld (66) zum Speichern von Werten, auf welche mittels einer Zugriffsanforderung zugegriffen werden kann; und
b. ein Sperrfeld (68), welches mit dem Wertefeld adresiert wird un anzeigt, ob das Wertefeld gesperrt ist;
dadurch gekennzeichnet, daß es sich bei dem ersten und dem zweiten Typ von Zugriffsanforderungen um Hybridanforderungen handelt, welche auch das Sperren des Speichers steuern; und
gekennzeichnet durch eine Steuerung (24) zur Steuerung der Handhabung von Zugriffsanforderungen zu dem Speicher und zum Sperren des Sperrfeldes in Abhängigkeit von einer Zugriffsanforderung des ersten Typs von Zugriffsanforderungen, wobei die Steuerung, dann, wenn das Sperrfeld gesperrt ist, den Zugriff auf das Wertefeld für eine Zugriffsanforderung des ersten Typs von Zugriffsanforderungen verzögert, welcher das Wertefeld gesperrt hat, jedoch das Wertefeld entsperrt und jede Zugriffsanforderung des zweiten Typs von Zugriffsanforderungen bedient.

2. Datenverarbeitungssystem nach Anspruch 1, bei dem der erste Typ von Zugriffsanforderungen vom Typ einer Lese/Sperr-Anforderung ist und der zweite Typ von Zugriffsanforderungen vom Typ einer Schreib/Entsperr-Anforderung.

3. Datenverarbeitungssystem nach Anspruch 1 oder 2, bei dem das Verriegelungsfeld (68) einen Zustand "gesperrt und verzögert" umfaßt, welcher anzeigt, daß mehrere Anforderungen vom Verriegelungstyp noch auf eine Ausführung warten und in einer Warteliste von Anforderungen gespeichert sind.

4. Datenverarbeitungssystem nach Anspruch 3, bei dem das Wertefeld (66) dann, wenn das Sperrfeld (68) sich in dem Zustand "gesperrt und verzögert" befindet, einen Zeiger enthält, welcher auf eine Warteliste von Zugriffsanforderungen des sperrenden Typs zeigt.

5. Datenverarbeitungssystem nach einem der Ansprüche 1 bis 4, bei dem das Sperrfeld (68) einen Zustand "entsperrt und verzögert" umfaßt, welcher anzeigt, daß mehrere Anforderungen des entsperrenden Typs vorliegen und in einer Warteliste von Anforderungen gespeichert sind.

6. Datenverarbeitungssystem nach Anspruch 5, bei dem das Wertefeld (66), dann, wenn sich das Sperrfeld (68) in dem Zustand "entsperrt und verzögert" befindet, einen Zeiger enthält, der auf eine Warteliste von Zugriffsanforderungen des sperrenden Typs zeigt.

7. Verfahren zum Synchronisieren des Zugriffs mehrerer Prozesse, die in einem Datenverarbeitungssystem ablaufen, auf eine Datenverarbeitungs-Hilfseinrichtung (10) mit Hilfe von Zugriffsanforderungen mindestens eines ersten und eines zweiten Typs, welche Lese- und
Schreib-Anforderungen umfassen, wobei diese Hilfseinrichtung eine Synchronisiereinrichtung (24) mit einem Sperrfeld (68) umfaßt, um den laufenden Sperrzustand der Hilfseinrichtung anzuzeigen, dadurch gekennzeichnet, daß die Anforderungen des ersten und des zweiten Typs Hybridanforderungen sind, welche außerdem das Sperren der Hilfseinrichtung steuern; und
gekennzeichnet durch die (folgenden) Schritte:
a. Die Synchronisiereinrichtung (24) setzt das Verriegelungsfeld (68) der Hilfseinrichtung in einen gesperrten Zustand, wenn die Hilfseinrichtung durch eine Zugriffsanforderung des ersten Typs angefordert wird, wenn sich das Verriegelungsfeld (68) in einem nicht gesperrten Zustand befindet;
b. die Synchronisiereinrichtung (24) setzt das Verriegelungsfeld (68) der Hilfseinrichtung auf einen nicht gesperrten Zustand, wenn die Hilfseinrichtung durch eine Zugriffsanforderung des zweiten Anforderungstyps angefordert wird, wenn sich das Verriegelungsfeld in einem gesperrten Zustand befindet; und
c. die Synchronisiereinrichtung (24) setzt das Verriegelungsfeld (68) der Hilfseinrichtung in einen Zustand "gesperrt und verzögert", wenn die Hilfseinrichtung durch eine Zugriffsanforderung des ersten Typs angefordert wird, wenn sich das Sperrfeld in einem gesperrten Zustand befindet, und die Synchronisiereinrichtung fügt dann außerdem die Anforderung der Hilfseinrichtung einer Warteliste von noch zu erledigenden Hilfseinrichtungsanforderungen des ersten Typs hinzu.

8. Verfahren nach Anspruch 7, bei dem die Zugriffsanforderung des ersten Typs eine Lese/Sperr-Anforderung ist und bei dem die Zugriffsanforderung des zweiten Typs eine Schreib/Entsperr-Anforderung ist.

9. Verfahren nach Anspruch 7 oder 8, welches ferner den (folgenden) Schritt umfaßt:
Die Synchronisiereinrichtung (24) setzt das Verriegelungsfeld (68) der Hilfseinrichtung auf einen Zustand "entsperrt und verzögert", wenn die Anforderung der Hilfseinrichtung durch eine Zugriffsanforderung des zweiten Typs erfolgt und wenn sich das Verriegelungsfeld in dem nicht gesperrten Zustand befindet, und die Synchronisiereinrichtung fügt dann außerdem die Anforderung der Hilfseinrichtung einer Warteliste von noch zu erledigenden Anforderungen des zweiten Typs hinzu.

10. Verfahren nach Anspruch 7, 8 oder 9, welches ferner den (folgenden) Schritt umfaßt:
Die Synchronisiereinrichtung (24) hält das Verriegelungsfeld (68) der Hilfseinrichtung in einem Zustand "gesperrt und verzögert", wenn die Hilfseinrichtung durch eine Zugriffsanforderung des ersten Typs angefordert wird und wenn sich das Sperrfeld in dem Zustand "gesperrt und verzögert" befindet, und die Synchronisiereinrichtung addiert dann die Anforderung der Hilfseinrichtung zu einer Warteliste von noch zu erledigenden Anforderungen des ersten Typs.

11. Verfahren nach einem der Ansprüche 7 bis 10, welches ferner den (folgenden) Schritt umfaßt:
Die Synchronisiereinrichtung (24) hält das Verriegelungsfeld (68) der Hilfseinrichtung in einem Zustand "entsperrt und verzögert", wenn die Hilfseinrichtung durch eine Zugriffsanforderung des zweiten Typs angefordert wird und wenn sich das Sperrfeld in dem Zustand "entsperrt und verzögert" befindet, und die Synchronisiereinrichtung fügt dann die Anforderung nach der Hilfseinrichtung der Warteliste von noch zu erledigenden Anforderungen des zweiten Typs nach der Hilfseinrichtung hinzu.

12. Verfahren nach einem der Ansprüche 7 bis 11, welches ferner den (folgenden) Schritt umfaßt:
Die Synchronisiereinrichtung (24) hält das Sperrfeld (68) der Hilfseinrichtung in einem Zustand "gesperrt und verzögert", wenn die Hilfseinrichtung durch eine Zugriffsanforderung des zweiten Typs angefordert wird, wenn sich das Sperrfeld (68) in einem Zustand "gesperrt und verzögert" befindet und noch weitere Einrichtungs-Anforderungen des ersten Typs bereits empfangen wurden, aber noch zu erledigen sind, und die Synchronisiereinrichtung wirft dann außerdem eine noch zu erledigende Anforderung nach der Hilfseinrichtung aus der Warteliste der noch zu erledigenden Anforderungen des ersten Typs heraus.

13. Verfahren nach einem der Ansprüche 7 bis 12, welches ferner den (folgenden) Schritt umfaßt:
Die Synchronisiereinrichtung (24) hält das Sperrfeld (68) der Hilfseinrichtung in einem Zustand "entsperrt und verzögert", wenn die Hilfseinrichtung durch eine Zugriffsanforderung des zweiten Typs angefordert wird, während sich das Sperrfeld in einem Zustand "entsperrt und verzögert" befindet und weitere Anforderungen des ersten Typs nach der Hilfseinrichtung bereits empfangen wurden, aber noch zu erledigen sind, und die Synchronisiereinrichtung wirft dann auch eine noch zu erledigende Anforderung aus der Warteliste von noch zu erledigenden Hilfseinrichtungs-Anforderungen des ersten Typs heraus.

14. Verfahren nach einem der Ansprüche 7 bis 13, welches ferner den (folgenden) Schritt umfaßt:
Die Synchronisiereinrichtung (24) setzt das Sperrfeld (68) der Hilfseinrichtung dann, wenn diese von einer Zugriffsanforderung des zweiten Typs angefordert wird, in einen gesperrten Zustand, wenn das Sperrfeld sich in einem Zustand "gesperrt und verzögert" befindet und lediglich eine noch zu erledigende Anforderung des ersten Typs nach der Hilfseinrichtung vorliegt, und die Synchronisiereinrichtung wirft dann auch die letzte noch zu erledigende Anforderung nach der Hilfseinrichtung aus der Warteliste von noch zu erledigenden Hilfseinrichtungs-Anforderungen des ersten Typs heraus.

15. Verfahren nach einem der Ansprüche 7 bis 14, welches ferner den (folgenden) Schritt umfaßt:
Die Synchronisiereinrichtung (24) setzt das Sperrfeld (68) der Hilfseinrichtung auf einen entsperrten Zustand, wenn eine Anforderung der Hilfseinrichtung durch eine Zugriffsanforderung des ersten Typs erfolgt, wenn sich das Sperrfeld in einem Zustand "entsperrt und verzögert" befindet und lediglich noch eine Anforderung des zweiten Typs nach der Hilfseinrichtung zu erledigen ist, und die Synchronisiereinrichtung wirft dann auch die letzte noch zu erledigende Hilfseinrichtungs-Anforderung aus der Warteliste von zu erledigenden Hilfseinrichtungs-Anforderungen des zweiten Typs heraus.

16. Verfahren nach einem der Ansprüche 7 bis 15, bei dem die Hilfseinrichtung ein zeitlich gestaffelt gemeinsam genutzter Speicher ist.

## Revendications

1. Système de traitement de données, comprenant:
au moins un élément de traitement (5) pour envoyer des demandes d'accès à une mémoire de traitement de données (10) d'au moins un premier et un second types de demande d'accès comprenant des demandes de lecture et d'écriture; et
une mémoire (20, 22) emmagasinant une structure de données pour mettre en oeuvre un protocole de verrouillage pour des demandes d'accès à la mémoire, comprenant:
a. une zone de valeurs (66) pour contenir des valeurs auxquelles il peut être accédé par une demande d'accès; et
b. une zone de verrou (68) à laquelle il est accédé par la zone de valeurs et indiquant si la zone de valeurs est verrouillée;
caractérisé en ce que les premier et second types de demandes d'accès sont des demandes hybrides qui commandent également le verrouillage de la mémoire; et
caractérisé par un contrôleur (24) pour commander la prise en charge de demandes d'accès à la mémoire et le verrouillage de la zone de verrou en réponse à une demande d'accès du premier type de demande d'accès, le contrôleur, lorsque la zone de verrou est verrouillée, différant l'accès à la zone de valeurs par une demande d'accès du premier type de demande d'accès qui avait verrouillé la zone de valeurs, mais déverrouillant la zone de valeurs et prenant en charge toute demande d'accès du second type de demande d'accès.

2. Système de traitement de données selon la revendication 1, dans lequel le premier type de demande d'accès est un type de demande lecture/verrouillage, et le second type de demande d'accès est un type de demande écriture/déverrouillage.

3. Système de traitement de données selon la revendication 1 ou la revendication 2, dans lequel la zone de verrou (68) comprend un état verrouillé et différé qui indique que de multiples demandes du type à verrouillage sont en suspens et emmagasinées dans une liste de demandes différée.

4. Système de traitement de données selon la revendication 3 dans lequel, lorsque la zone de verrou (68) est dans l'état verrouillé et différé, la zone de valeurs (66) contient un pointeur qui désigne une liste différée de demandes d'accès de type à verrouillage.

5. Système de traitement de données selon l'une quelconque des revendications 1 à 4 dans lequel la zone de verrou (68) comprend un état déverrouillé et différé qui indique que de multiples demandes du type à déverrouillage sont en suspens et sont emmagasinées sur une liste de demandes différée.

6. Système de traitement de données selon la revendication 5, dans lequel, lorsque la zone de verrou (68) est dans l'état déverrouillé et différé, la zone de valeurs (66) contient un pointeur qui désigne une liste différée de demandes d'accès du type à verrouillage.

7. Procédé de synchronisation de l'accès à une ressource de traitement de données (10) par une multiplicité de traitements générés dans un système de traitement de données, au moyen d'au moins un premier et un second types de demandes d'accès qui comportent des demandes de lecture et d'écriture, dans lequel la ressource contient un synchroniseur (24) comportant une zone de verrou (68) pour indiquer l'état de verrouillage en cours de la ressource, caractérisé en ce que les premier et second types de demandes sont des demandes hybrides qui commandent également le verrouillage de la ressource; et
caractérisé par les étapes selon lesquelles:
a. le synchroniseur (24) positionne la zone de verrou (68) de la ressource sur un état verrouillé lorsque la ressource est demandée par le premier type de demande d'accès si la zone de verrou (68) est dans un état déverrouillé;
b. le synchroniseur (24) positionne la zone de verrou (68) de la ressource sur un état déverrouillé lorsque la ressource est demandée par toute demande d'accès du second type de demande d'accès si la zone de verrou est dans un état verrouillé; et
c. le synchroniseur (24) positionne la zone de verrou (68) de la ressource sur un état verrouillé et différé lorsque la ressource est demandée par le premier type de demande d'accès si la zone de verrou est dans un état verrouillé, le synchroniseur ajoutant alors également la demande de ressource à une liste différée de demandes de ressources en suspens du premier type.

8. Procédé selon la revendication 7, dans lequel le premier type de demande d'accès est un type de demande lecture/verrouillage, et le second type de demande d'accès est un type de demande écriture/déverrouillage.

9. Procédé selon la revendication 7 ou la revendication 8, comprenant, en outre, l'étape selon laquelle:
le synchroniseur (24) positionne la zone de verrou (68) de la ressource sur un état déverrouillé et différé lorsque la ressource est demandée par le second type de demande d'accès si la zone de verrou est dans état déverrouillé, le synchroniseur ajoutant alors également la demande de ressource sur une liste différée de demandes de ressource en suspens du second type.

10. Procédé selon l'une des revendications 7, 8 et 9, comprenant, en outre, l'étape selon laquelle:
le synchroniseur (24) maintient la zone de verrou (68) de la ressource dans un état verrouillé et différé lorsque la ressource est demandée par le premier type de demande d'accès si la zone de verrou est dans un état verrouillé et différé, le synchroniseur ajoutant alors également la demande de ressource à une liste différée de demandes de ressource en suspens du premier type.

11. Procédé selon l'une quelconque des revendications 7 à 10, comprenant, en outre, l'étape selon laquelle:
le synchroniseur (24) maintient la zone de verrou (68) de la ressource dans un état déverrouillé et différé lorsque la ressource est demandée par le second type de demande d'accès si la zone de verrou est dans un état déverrouillé et différé, le synchroniseur ajoutant alors également la demande de ressource à la liste différée de demandes de ressource en suspens du second type.

12. Procédé selon l'une quelconque des revendications 7 à 11, comprenant, en outre, l'étape selon laquelle:
le synchroniseur (24) maintient la zone de verrou (68) de la ressource dans un état verrouillé et différé lorsque la ressource est demandée par le second type de demande d'accès si la zone de verrou (68) est dans un état verrouillé et différé et que d'autres demandes de ressource du premier type ont été reçues mais sont encore en attente, le synchroniseur éjectant alors également une demande de ressource en suspens hors de la liste différée de demandes de ressource en suspens du premier type.

13. Procédé selon l'une quelconque des revendications 7 à 12, comprenant, en outre, l'étape selon laquelle:
le synchroniseur (24) maintient la zone de verrou (68) de la ressource dans un état déverrouillé et différé lorsque la ressource est demandée par le second type de demande d'accès si la zone de verrou est dans un état déverrouillé et différé et que d'autres demandes de ressource du premier type ont été reçues mais sont encore en attente, le synchroniseur éjectant alors également une demande de ressource en suspens hors de la liste différée de demandes de ressource en suspens du premier type.

14. Procédé selon l'une quelconque des revendications 7 à 13 comprenant, en outre, l'étape selon laquelle:
le synchroniseur (24) positionne la zone de verrou (68) de la ressource sur un état verrouillé lorsque la ressource est demandée par le second type de demande d'accès si la zone de verrou est dans un état verrouillé et différé et qu'une seule demande de ressource du premier type est en attente, le synchroniseur éjectant alors également la dernière demande de ressource en suspens hors de la liste différée de demandes de ressource en suspens du premier type.

15. Procédé selon l'une quelconque des revendications 7 à 14 comprenant, en outre, l'étape selon laquelle:
le synchroniseur (24) positionne la zone de verrou (68) de la ressource sur un état déverrouillé lorsque la ressource est demandée par le premier type de demande d'accès si la zone de verrou est dans un état déverrouillé et différé et qu'une seule demande de ressource du second type est en attente, le synchroniseur éjectant alors également la dernière demande de ressource en suspens hors de la liste différée de demandes de ressource en suspens du second type.

16. Procédé selon l'une quelconque des revendications 7 à 15, dans lequel la ressource est une mémoire partagée.
